# EUROPÄISCHE PATENTANMELDUNG

(11) **EP 4 458 126 A1**
(43) Veröffentlichungstag der Anmeldung: **06.11.2024**
(21) Anmeldenummer: 24165404.5
(22) Anmeldetag: 22.03.2024
(51) Int. Cl.: A01D 1/00

(54) **MÄHDECKHÖHENVERSTELLUNG MIT ERINNERUNGSFUNKTION**

(30) Priorität: 24.03.2023 DE 202023101485 U
(71) Anmelder: AL-KO Production Austria GmbH, 8742 Obdach (AT)
(72) Erfinder: Kempfle, Thomas, 89346 Bibertal (DE); Huber, Jochen, 89364 Rettenbach (DE)
(74) Vertreter: ERNICKE Patent- und Rechtsanwälte PartmbB

(57) **Zusammenfassung**

Höhenmerkvorrichtung für ein Gartenmähfahrzeug (1) mit einem höhenverstellbaren Mähdeck (2). Wobei das Gartenmähfahrzeug (1) eine Höhenstellvorrichtung (3) umfasst, mit der das Mähdeck (2) in mehreren Mähdeckhöhen (H) auf einer Höhenskala (8) einstellbar ist. Wobei die Höhenmerkvorrichtung (4) dazu ausgebildet ist, eine der mehreren einstellbaren Mähdeckhöhen (H) als Merkposition (M) zu speichern, und ein Anzeigemittel (9) umfasst, das dem Benutzer die gespeicherte Merkposition (M) anzeigt, und ein Einstellmittel (10) umfasst, mit dem die Merkposition (M) vom Benutzer einstellbar ist. Dadurch gekennzeichnet, dass die Höhenmerkvorrichtung (4) ein mechanisches Einstellmittel (10), mit einem Handgriff (11) umfasst, mit dem die Merkposition (M) durch den Benutzer einstellbar ist.

## Beschreibung

Die Erfindung liegt auf dem Gebiet der Rasenmäher, insbesondere der Rasentraktoren mit in der Höhe verstellbarem Mähwerk für den Einsatz im Garten oder anderen Grünflächen.

Die Erfindung ist besonders für Aufsitzrasenmäher geeignet. In der bevorzugten Ausführungsform handelt es sich bei dem Gartenmähfahrzeug um einen Rasentraktor (auch Aufsitzrasenmäher genannt). Solche Rasentraktoren werden in der Regel im privaten oder gewerblichen Bereich eingesetzt und unterscheiden sich durch ihre offene, kompakte Bauweise sowie die eingesetzten Komponenten von landwirtschaftlichen Traktoren und landwirtschaftlichen Mähmaschinen. Rasenmäher im Allgemeinen und Rasentraktoren im Speziellen sind sowohl mit verbrennungsmotorischem als auch elektrischem Antrieb bekannt.

Beim Mähen einer Rasenfläche mit einem Rasenmäher beeinflusst die Höhe des Mähdecks über dem Boden die Schnitthöhe des Mähvorgangs. Die Schnitthöhe bestimmt, in welcher Höhe beim Überfahren der Rasenfläche das Gras durch die angetriebenen Messer im Mähdeck abgeschnitten wird und damit auch die Optik und Beschaffenheit der gemähten Rasenfläche. Die Mähdeckhöhe ist daher in der Regel durch den Benutzer einstellbar.

Aus dem Stand der Technik sind verschiedene Techniken zur Höheneinstellung des Mähwerks von Rasentraktoren bekannt. Im Bereich der Aufsitzmähfahrzeuge sind sowohl rein mechanische als auch elektrisch unterstützte (elektromechanische, elektrohydraulische oder elektropneumatische) Höhenstellsysteme bekannt. Mit den Höhenstellsystemen lässt sich die Mähposition des Mähdecks einstellen.

Aus dem Stand der Technik ist eine Vorrichtung zum Einstellen der Höhe eines Mähdecks mit einem Fußpedal (US 7,540,134 B1) bekannt, welche allerdings von einer Bedienung mit Handkraft abrät.

Aus dem Stand der Technik ist außerdem eine Mähwerktransportsperre (US 2022/0087100 A1) bekannt, welche allerdings keine händische Einstellung offenbart.

Elektrische Höhenstellsysteme für das Mähdeck haben den Nachteil, dass diese eine verhältnismäßig aufwendige und damit teure Antriebstechnik und Steuerungstechnik erfordern.

Mechanische Höhenstellsysteme sind besonders im Gartenbereich beliebt, da diese robust und mit einfachen Komponenten herstellbar sind. Mechanische Höhenstellsysteme verfügen beispielsweise über einen Höhenstellhebel, mit dem sich die Höhe des Mähdecks durch den Benutzer in mehreren Stufen (z.B. tiefste Höheneinstellung 1 bis höchste Höheneinstellung 7) einstellen lässt. Mit dem Hebel kann das Mähdeck in der Höhe verstellt und in der gewünschten Position eingerastet werden.

Für bestimmte Fahrten, z.B. zum Ausleeren eines Grasauffangbehälters oder über unebenes Gelände, möchte der Benutzer das Mähdeck in der Regel in eine sog. Transportposition anheben. Die Transportposition ist in der Regel die höchste Position des Mähdecks, in der das Mähdeck einen großen Abstand zum Boden hat.

Während eines längeren Mähvorgangs will der Benutzer gegebenenfalls mehrfach zwischen der nach seinen Wünschen einstellbaren Mähposition des Mähdecks und der Transportposition wechseln, z.B. um Gehwege zu überfahren oder mehrmals den Auffangbehälter zu leeren. Bei einfach zu bedienenden mechanischen Höhenstellsystemen zieht der Benutzer beispielsweise an einem Höhenstellhebel, hebt damit das Mähdeck bis in die Transportposition und verlässt seine Mähspur mit angehobenem Mähdeck. Zur Wiederaufnahme des Mähvorgangs senkt der Benutzer durch Ausrasten und Ablassen des Höhenstellhebels das Mähdeck wieder bis zur gewünschten Höhenposition des Mähdecks ab. Hierbei stellt sich die Herausforderung, dass das Mähdeck wieder in derselben Mähdeckhöhe wie zu Beginn des Mähvorgangs eingestellt werden muss, um den Rasen durchgehend mit derselben Schnitthöhe zu Mähen, damit keine unterschiedlichen Schnitthöhen in der Rasenfläche zu sehen sind. Hat der Benutzer beispielsweise die Rasenfläche mit Mähdeckhöhe 3 zu mähen begonnen, zwischendurch die Rasenfläche mit dem Mähdeck in der obersten Transportposition (bspw. Mähdeckhöhe 7) verlassen und bei Rückkehr zur letzten Mähposition versehentlich das Mähdeck auf Mähdeckhöhe 2 eingestellt, wird sich eine sichtbare Stufe in der gemähten Rasenfläche abzeichnen. Durch solche versehentlichen Fehleinstellungen der Mähdeckhöhe, besonders bei der Rückkehr aus der Transportposition, kann es zu Beeinträchtigungen der Rasenfläche kommen. Zur Nachbesserung muss häufig die gesamte Rasenfläche erneut in der tieferen Mähdeckhöhe gemäht werden, was unnötigen Mehraufwand für den Benutzer bedeutet.

Aufgabe der Erfindung ist es eine verbesserte Technik zur Höheneinstellung des Mähdecks von Gartenmähfahrzeugen bereitzustellen.

Die Erfindung löst diese Aufgabe mit einer Höhenmerkvorrichtung sowie einem Gartenmähfahrzeug mit den Merkmalen der eigenständigen Ansprüche.

Es wird eine Höhenmerkvorrichtung für ein Gartenmähfahrzeug, vorzugsweise einen Rasentraktor, offenbart. Das Gartenmähfahrzeug umfasst ein höhenverstellbares Mähdeck, das mit einer Höhenstellvorrichtung in mehreren Mähdeckhöhen einstellbar ist. Die Mähdeckhöhe kann auf einer beliebigen Höhenskala einstellbar sein. Vorteilhaft für die einfache Bedienung ist eine stufenweise Höhenskala, z.B. von einer tiefsten einstellbaren Mähdeckhöhe 1 bis zu einer höchsten einstellbaren Mähdeckhöhe 7. Die Höhenskala ist vorzugsweise durch Ziffern oder andere Zeichen an den Bedienelementen der Höhenstellvorrichtung für den Benutzer sichtbar abgebildet, z.B. durch Aufdrucke, Prägungen oder ein anderes Anzeigemittel.

Die Höhenstellvorrichtung ist vorzugsweise eine mechanische Höhenstellvorrichtung, z.B. mit einem durch Handkraft bedienbaren Höhenstellhebel. Die Höhenstellvorrichtung kann eine Kraftunterstützungsvorrichtung, z.B. Federn oder andere mechanische, elektrische, hydraulische, pneumatische Unterstützung, umfassen, die dem Benutzer die Höhenverstellung des Mähdecks erleichtert. Die Höhenmerkvorrichtung ist vorzugsweise dazu ausgebildet, mit einer mechanischen oder zumindest mechanisch betätigbaren Höhenstellvorrichtung verbunden zu werden.

Die Höhenmerkvorrichtung ist dazu ausgebildet, mindestens eine der einstellbaren Mähdeckhöhen als Merkposition zu speichern. Durch die Speicherung der Merkposition kann der Benutzer gezielt die gemerkte Mähdeckhöhe, d.h. die Merkposition, abrufen. Die Speicherung der Merkposition unterstützt den Benutzer des Gartenmähfahrzeugs bei der Bedienung und verhindert ein versehentliches Wechseln der Mähdeckhöhe während eines Mähvorgangs und damit störende Stufen der Schnitthöhe.

Die Speicherung der Mähdeckhöhe erfolgt vorzugsweise mechanisch, z.B. durch Einrasten, Klemmen, einen metastabilen Zustand oder andere mechanische Positionsspeichermittel. Die mechanische Speicherung ist robust, mit günstigen konstruktiven Mittel umsetzbar und für den Benutzer intuitiv zu bedienen.

Die Höhenmerkvorrichtung umfasst ein Anzeigemittel, das dem Benutzer die gespeicherte Merkposition anzeigt. Das Anzeigemittel der Höhenmerkvorrichtung ist vorzugsweise ein zusätzliches Anzeigemittel zur Anzeige der Merkposition. Das Anzeigemittel kann insbesondere mit der Höhenskala der Höhenstellvorrichtung kombiniert sein, sich auf die Höhenskala beziehen oder auch unabhängig von der Höhenskala der Höhenstellvorrichtung ausgebildet sein. In der bevorzugten Ausführungsform ist das Anzeigemittel der Höhenmerkvorrichtung dazu ausgebildet, dem Benutzer die Merkposition (z.B. mit einem verschiebbaren Sichtfenster oder einer verschiebbaren Markierung) auf der Höhenskala der Höhenstellvorrichtung anzuzeigen. Das Anzeigemittel hat den ergonomischen Effekt, dass der Benutzer die Merkposition optisch abrufen kann und ist daher besonders intuitiv benutzbar. Die Anzeige kann mit weiteren Benutzerschnittstellenmitteln, z.B. haptischen oder akustischen Mitteln, kombiniert werden. Beispielsweise kann dem Benutzer durch Rasten oder Klickgeräusche das Erreichen der Merkposition mitgeteilt werden.

In einer besonders vorteilhaften Ausführungsform ist die Höhenmerkvorrichtung durch eine mechanische Begrenzung der Höhenstellbewegung an die Höhenstellvorrichtung koppelbar. Diese mechanische Koppelung hat mehrere Benutzerschnittellenfunktionen.

Hat der Benutzer beispielsweise die Merkposition auf die Mähdeckhöhe 3 eingestellt, kann durch die mechanische Koppelung die Höhenstellbewegung der Höhenstellvorrichtung auf eine Verstellung zwischen der höchsten Mähdeckhöhe (z.B. 7 = Transportposition) und der Merkposition 3 begrenzt werden. Vorteilhafterweise umfasst die Höhenmerkvorrichtung eine Begrenzungsvorrichtung, die dazu ausgebildet ist, die Höhenstellbewegung der Höhenstellvorrichtung zu begrenzen.

Beim Ablassen des Mähdecks mit der Höhenstellvorrichtung kann der Benutzer bis zum Ende des durch die Höhenmerkvorrichtung begrenzten Höhenstellwegs (Merkposition 3) absenken und erhält durch den Anschlag eine haptische Rückmeldung, dass er das eingestellte Ende der Höhenstellbewegung und gleichzeitig die eingestellte Merkposition erreicht hat. Die mechanische Koppelung durch Begrenzung der Höhenstellbewegung ist für den Benutzer besonders intuitiv, einfach und schnell zu bedienen und erhöht damit die Funktionssicherheit in Bezug auf eine konstante Schnitthöhe, die Benutzerfreundlichkeit und die Ergonomie.

Weiterhin umfasst die Höhenmerkvorrichtung ein Einstellmittel, mit dem die Merkposition vom Benutzer einstellbar ist. Das Einstellmittel kann dazu ausgebildet sein, die momentan eingestellte Mähdeckhöhe als zu speichernde Merkposition zu übernehmen und/oder die Merkposition direkt einzustellen. Vorzugsweise kann der Benutzer die Merkposition (z.B. Mähdeckhöhe 3 auf einer Höhenskala von 1 bis 7) direkt einstellen. Je nach Ausführungsform muss die Höhenstellvorrichtung zur Einstellung der Merkposition in einen bestimmten Zustand gebracht werden, z.B. ein Höhenstellhebel in die Transportposition gebracht werden.

Mit dem Einstellmittel der Höhenmerkvorrichtung steht dem Benutzer ein zusätzliches Einstellmittel zur Höhenstellvorrichtung zur Verfügung, mit dem der Benutzer gezielt die Merkposition zusätzlich zur derzeit über die Höhenstellvorrichtung eingestellte Mähdeckhöhe einstellen kann. Damit hat der Benutzer eine weitere Einstellmöglichkeit des Gartenmähfahrzeugs gewonnen, die die Flexibilität der Bedienung erhöht.

Das Einstellmittel ist vorzugsweise mechanisch ausgebildet. In der bevorzugten Ausführungsform umfasst das Einstellmittel einen Handgriff, mit dem die Merkposition durch den Benutzer einstellbar ist. Das Einstellmittel ist vorzugsweise im Bereich der Höhenstellvorrichtung, z.B. neben dem Höhenstellhebel, angeordnet.

In einer besonders vorteilhaften Ausführungsform ist die Höhenmerkvorrichtung, insbesondere das Anzeigemittel und das Einstellmittel, im Bereich, vorzugsweise direkt an, der Höhenstellvorrichtung angeordnet. Die gemeinsame Anordnung ist insbesondere bei mechanischen Höhenstellvorrichtungen und/oder mechanischen Höhenmerkvorrichtungen vorteilhaft für die Ergonomie und eine intuitive Benutzung. In einer besonders vorteilhaften Ausführungsform ist die Höhenmerkvorrichtung neben dem Sitz des Rasentraktors angeordnet und kann durch den Benutzer vom Sitz aus mit seiner Hand bedient werden. Neben dem Sitz angeordnet bedeutet insbesondere in der vorgesehenen Fahrtrichtung oder Arbeitsrichtung des Mähwerks, seitlich versetzt zu einem Sitz des Gartenmähfahrzeugs. Diese Anordnung hat insbesondere ergonomische und betriebswirtschaftliche Vorteile gegenüber Höheneinstellvorrichtungen aus dem Stand der Technik, die mit Fußpedal, elektronischen Stellmitteln oder elektronischen Anzeigen funktionieren.

Die Höhenmerkvorrichtung kann als vormontierte oder integrierte Komponente der Gartenmähfahrzeug oder auch als Nachrüstkomponente ausgebildet sein. Die Erfindung und alle hier offenbarten Merkmale beziehen sich sowohl auf eine nachrüstbare Höhenmerkvorrichtung, die als eigenständige Vorrichtung hergestellt und ausgeliefert werden kann, als auch auf eine Komponente eines besonders für diesen Einsatz ausgebildetes Gartenmähfahrzeugs.

Gegenstand der Erfindung ist daher außerdem eine Gartenmähfahrzeug mit einem höhenverstellbaren Mähdeck, einer geeigneten Höhenstellvorrichtung und einer Höhenmerkvorrichtung.

Das Gartenmähfahrzeug umfasst vorzugsweise eine mechanische Höhenstellvorrichtung, insbesondere mit einem Höhenstellhebel. Die Höhenstellvorrichtung ist vorzugsweise mit Handkraft durch den Benutzer vom Sitz aus betätigbar. Vorzugsweise kann das Mähdeck mit dem Höhenstellhebel durch Ziehen angehoben und durch Ablassen abgesenkt werden. Die Höhenstellvorrichtung kann dazu ausgebildet sein, die Mähdeckhöhe stufenweise oder kontinuierlich einzustellen. Abgestufte Höhenskalen sind für den Benutzer besonders einfach zu verstehen, leicht zu bedienen und daher besonders vorteilhaft.

Die Höhenstellvorrichtung des Gartenmähfahrzeugs kann eine mechanisch einrastbare Stufenskala umfassen, die mit der Höhenmerkvorrichtung kompatibel ist oder insbesondere durch eine nachrüstbare Höhenmerkvorrichtung ersetzt werden kann.

Die Höhenmerkvorrichtung kann insbesondere dazu ausgebildet sein, eine in mindestens drei Mähdeckhöhenstufen (z.B. sieben einzeln einrastbare Mähdeckhöhen) einstellbare Höhenstellvorrichtung derart weiterzubilden, dass der Benutzer nur noch zwischen einer einrastbaren höchsten Mähdeckhöhe (Transportposition) und der eingestellten Merkposition wechseln kann. Hierdurch wird die Bedienung gegenüber mehr als zwei Einstellmöglichkeiten weiter vereinfacht und versehentliche Fehlbedienungen vermieden. Vorzugsweise ist das Mähdeck des Gartenmähfahrzeugs stufenlos nur zwischen einer Transportposition und der eingestellten Merkposition verstellbar.

Weitere vorteilhafte Ausführungsformen und Merkmale der Erfindung werden nachfolgend anhand der Zeichnungen beschrieben. Die in dieser Offenbarung beschriebenen Merkmale beziehen sich jeweils sowohl auf eine Höhenmerkvorrichtung als auch auf ein Gartenmähfahrzeug. Einige Merkmale werden zur verbesserten Lesbarkeit in Bezug auf eine bestimmte Ausführungsform beschrieben. Diese Merkmale können auch unabhängig mit der jeweiligen Ausführungsform mit einem der Gegenständer der unabhängigen Ansprüche kombiniert werden und sind durch Verweis auch in Bezug auf diese Gegenstände offenbart.

Die Erfindung ist in den Zeichnungen beispielhaft und schematisch dargestellt.

### Liste der Figuren:

- Figur 1:: Gartenmähfahrzeug (1) mit einer vorteilhaften Höhenmerkvorrichtung (4) in einer Seitenansicht;
- Figur 2:: Gartenmähfahrzeug (1) in einer Draufsicht mit einem vergrößerten Ausschnitt einer Höhenstellvorrichtung (3) und daran angeordneten Höhenmerkvorrichtung (4);
- Figur 3:: Seitenansicht einer Höhenstellvorrichtung mit Mähdeck (2) in Transportposition (T);
- Figur 4:: Draufsicht einer Höhenstellvorrichtung mit Mähdeck (2) in Transportposition (T) mit vergrößertem Ausschnitt der Höhenstellvorrichtung und daran angeordneten Höhenmerkvorrichtung;
- Figur 5:: Seitenansicht einer Höhenstellvorrichtung mit Mähdeck (2) in Merkposition (M);
- Figur 6:: Draufsicht einer Höhenstellvorrichtung mit Mähdeck (2) in Merkposition (M) mit vergrößertem Ausschnitt der Höhenstellvorrichtung und daran angeordneten Höhenmerkvorrichtung;
- Figur 7:: Bevorzugte Ausführungsform einer Höhenmerkvorrichtung (4) in verschiedenen Perspektiven.

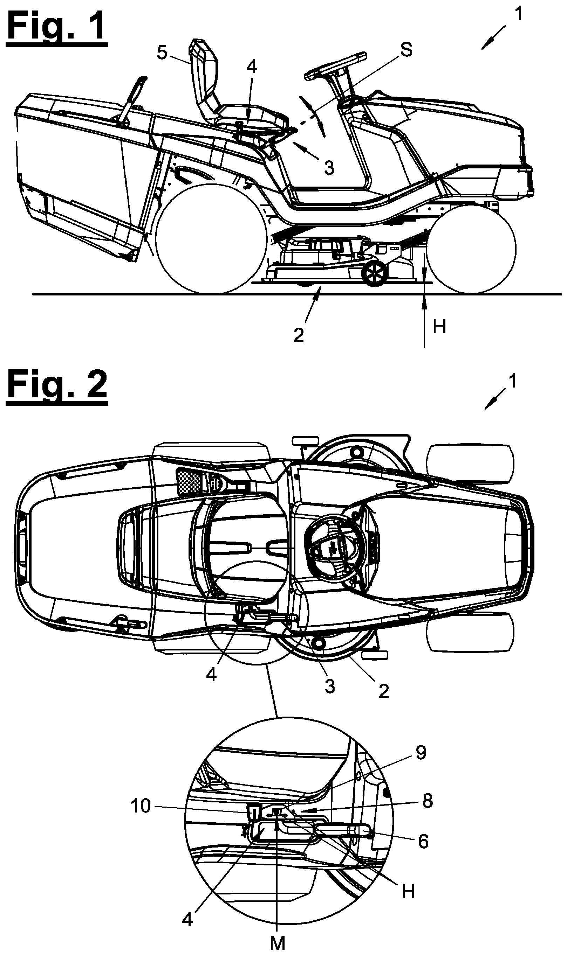

In den Figuren 1 und 2 wird eine vorteilhafte Ausführungsform eines Gartenmähfahrzeugs 1 gezeigt. Das Gartenmähfahrzeug 1 umfasst ein höhenverstellbares Mähdeck 2, eine Höhenstellvorrichtung 3 und eine Höhenmerkvorrichtung 4.

In der bevorzugten Ausführungsform sind die Höhenstellvorrichtung 3 und die Höhenmerkvorrichtung 4 neben dem Sitz 5 des Gartenmähfahrzeugs angeordnet.

Die Höhenstellvorrichtung 3 ist vorzugsweise entlang einer Höhenstellbewegung S verstellbar. In der bevorzugten Ausführungsform ist die Höhenstellvorrichtung 3 mechanisch. Die Höhenstellvorrichtung umfasst vorzugsweise einen Höhenstellhebel 6, mit dem das Mähdeck 2 in einer bestimmten Mähdeckhöhe H eingestellt werden kann.

Die verschiedenen Mähdeckhöhen H (z.B. Stufen von 1 bis 7) werden dem Benutzer vorzugsweise auf einer aufgedruckten, aufgeklebten oder plastisch ausgebildeten Höhenskala 8 dargestellt. Die höchste Mähdeckhöhe (Ziffer 7) ist in dieser Ausführungsform zugleich die Transportposition T des Mähdecks.

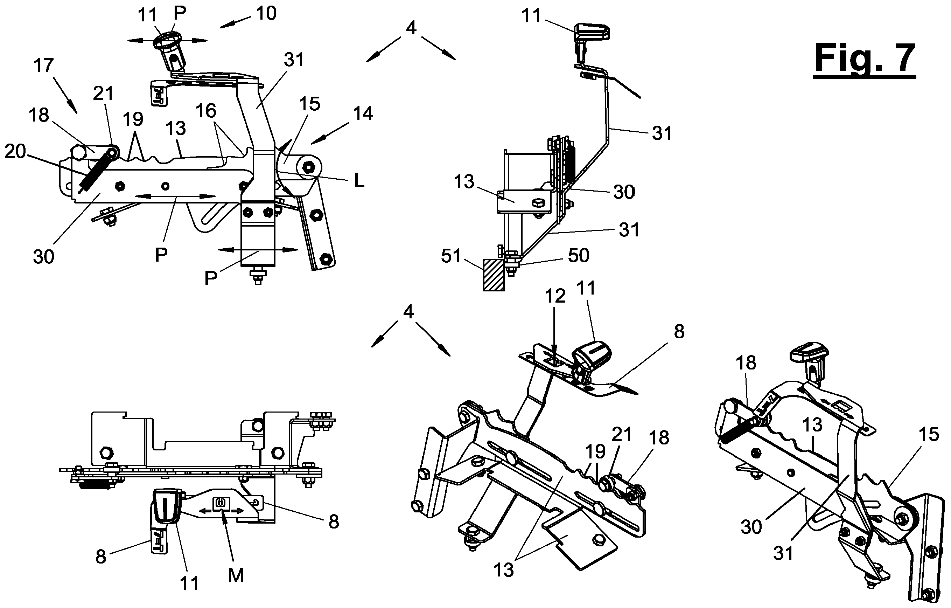

Die Höhenmerkvorrichtung umfasst ein Einstellmittel 10. Das Einstellmittel 10 ist vorzugsweise als Handgriff ausgebildet. Der Handgriff ist vorzugsweise an einem Arm befestigt, der mit einem bewegbaren Schlitten 30 (vgl. Figur 7) verbunden ist. Mit dem Einstellmittel lässt sich die Höhenmerkvorrichtung 4 bedienen und die Merkposition M einstellen.

Die aktuell eingestellte Merkposition M wird dem Benutzer durch ein Anzeigemittel 9, in der dargestellten Ausführungsform ein Anzeigefenster, angezeigt. Das Anzeigemittel 9 kann mit dem Einstellmittel gekoppelt sein und beispielsweise mit dem Handgriff in Verbindung mit der gespeicherten Merkposition verschoben werden. Alternativ oder zusätzliche können auch andere Anzeigemittel zur Anzeige des Merkposition M eingesetzt werden, beispielsweise eine separat oder in Verbindung mit dem Einstellmittel bewegbare Markierung. Das Anzeigemittel 9 bezieht sich vorteilhafterweise auf eine Darstellung der Höhenskala 8 des Höhenstellmittels. Dies ermöglicht dem Benutzer eine besonders leicht verständliche und einfache Bedienung des Höhenstellvorrichtung und der Höhenmerkvorrichtung.

In der dargestellten Ausführungsform ist die Höhenmerkvorrichtung direkt an der Höhenstellvorrichtung angeordnet. Dies ist besonders vorteilhaft, um dem Bediener sowohl eine Verstellung der Mähdeckhöhe (anheben oder absenken) als auch eine Einstellung der Merkposition M an derselben Stelle, vorzugsweise neben dem Sitz 5, und mit derselben Hand.

Zum Anheben des Mähdecks zieht der Benutzer den Höhenstellhebel 6 und hebt damit das Mähdeck bis in die Mähdeckhöhe (Ziffer 7), die der Transportposition T entspricht. In der Transportposition kann der Höhenstellhebel durch eine Querbewegung, d.h. quer zur Höhenstellbewegung S, eingerastet, d.h. arretiert, werden, sodass das Mähdeck 2 in dieser angehobenen Transportposition bleibt. Zum Absenken des Mähdecks kann der Höhenstellhebel aus der arretierten Transportposition durch eine entgegengesetzte Querbewegung gelöst und abgelassen werden.

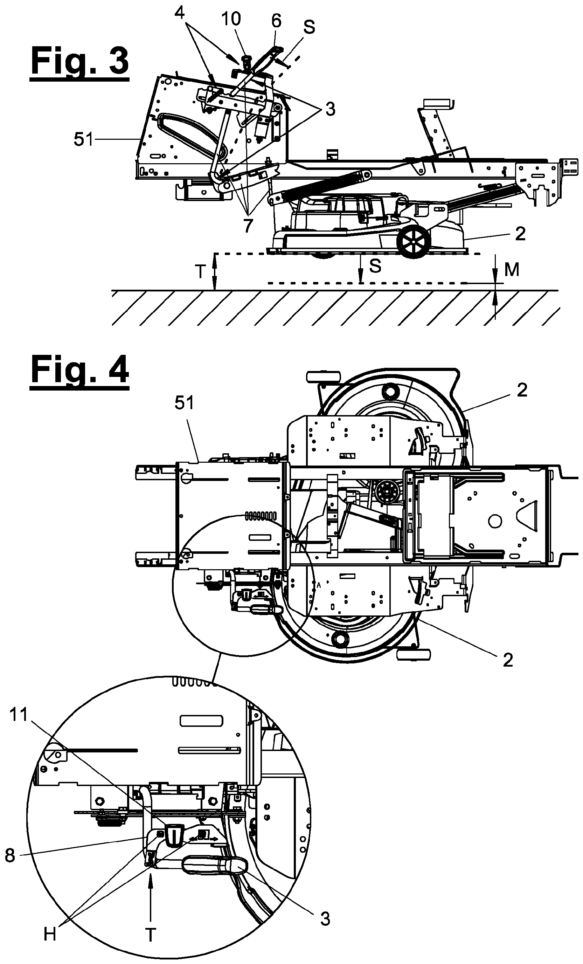

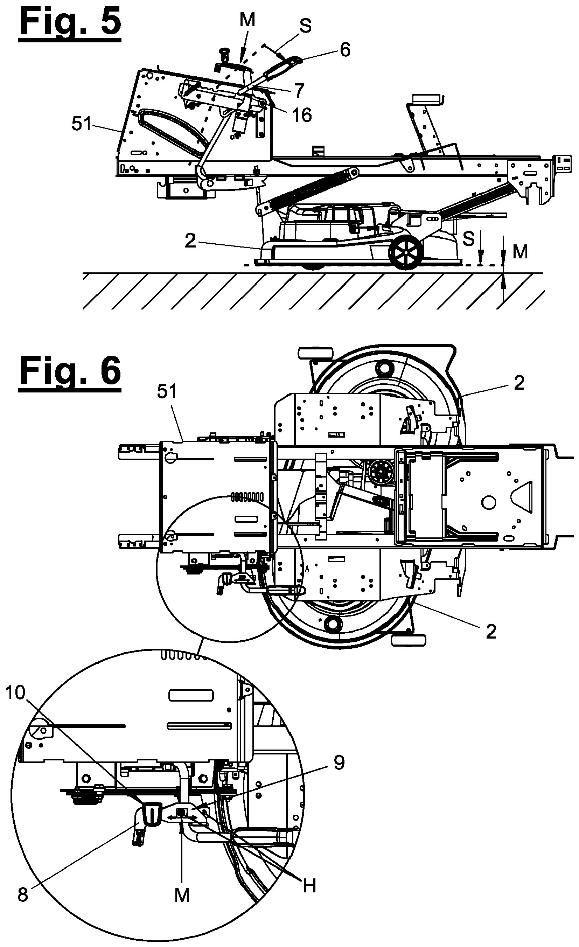

Die Figuren 3 und 4 zeigen die Höhenstellvorrichtung 3 und das Mähdeck 2 in der Transportposition T mit angehobenen Mähdeck. Die Figuren 5 und 6 zeigen die Höhenstellvorrichtung in der abgelassenen Merkposition M.

Die Höhenstellvorrichtung 3 umfasst vorzugsweise eine Höhenstellhebel 6 und ein Gestänge 7, das mit dem höhenverstellbaren Mähdeck 2 verbunden ist. Diese Ausführungsform ist ein vorteilhaftes Beispiel für eine rein mechanische Höhenverstellvorrichtung 3. Das Mähdeck 2 ist durch mehrere Schwingen an der Karosserie des Gartenmähfahrzeugs befestigt und damit parallel zur Bodenebene schwenkbar. Durch Schwenken des Mähdecks 2 wird die Mähdeckhöhe H gegenüber dem Boden verstellt.

In den Figuren 3 und 4 ist der Höhenstellhebel 6 entlang der Stellbewegung S absenkbar. Dabei senkt sich auch das Mähdeck 2 in Richtung der Bodenebene ab. Das Gestänge 7 umfasst vorzugsweise eine Hebelanordnung, die insbesondere durch Federn unterstützt sein kann. In der bevorzugten Ausführungsform senkt sich das Mähdeck durch dessen Eigengewicht ab. Federn und/oder Dämpfer oder andere Unterstützungsvorrichtungen können, insbesondere bei schweren Mähdecks, die notwendige Kraft zum Anheben bzw. kontrollierten Absenken, die der Benutzer vorzugsweise mit seiner Hand aufbringen muss, mindern.

Die Figuren 5 und 6 zeigen das Mähdeck 2 bzw. die Höhenstellvorrichtung in der Merkposition M. Im dargestellten Zustand ist die Mähdeckhöhe H = 3 (auf einer Höhenskala von 1 bis 7) als Merkposition M der Höhenmerkvorrichtung 4 eingestellt.

Der Höhenstellhebel 6 und das Mähdeck 2 wurden entlang der Höhenstellbewegung S bis in die Merkposition M abgesenkt. In der bevorzugten Ausführungsform ist die Höhenstellbewegung durch eine Begrenzungsvorrichtung der Höhenmerkvorrichtung (einseitig) begrenzt, sodass die Höhenstellbewegung S nur bis zur zuvor eingestellten Merkposition M = 3 möglich ist. Vorzugsweise fällt das Mähdeck durch dessen Eigengewicht, ggfs. gefedert, gedämpft und/oder durch den Benutzer gebremst, bis in die Merkposition M.

Durch die mechanische Höhenstellvorrichtung und die Höhenmerkvorrichtung mit Begrenzung der Höhenstellbewegung S entsteht eine besonders intuitive Benutzererfahrung. Der Benutzer hebt intuitiv mit einer ziehenden Hebebewegung am Höhenstellhebel 6 das Mähdeck 2 bis zur Transportposition T an (z.B. um den Auffangbehälter auszuleeren). Zur Wiederaufnahme des Mähvorgangs senkt der Benutzer das Mähdeck 2 durch eine Senkbewegung des Höhenstellhebels 6 ab, wobei die Absenkbewegung an der eingestellten Merkposition M stoppt. Der Benutzer braucht während der Höhenstellbewegung daher nicht genau darauf zu achten, bis in welche Höhenstufe (z.B. Mähdeckhöhen 1 bis 6) er das Mähdeck absenkt, wobei die Höhenskala ggfs. von der Position Benutzers in Abhängigkeit seiner Körpergröße und daraus resultierenden Perspektive undeutlich ablesbar ist. Die mechanische Hebe- und Senkbewegung lässt sich vom Benutzer auch blind und aus einer intuitiven Bewegung heraus vollziehen. Die Höhenmerkvorrichtung hat den Vorteil, dass der Benutzer leichter die zuvor eingestellte und gespeicherte Mähdeckhöhe wieder abrufen kann. Damit können Höheneinstellungsfehler vermieden und die Benutzerfreundlichkeit erhöht werden.

In einer besonders vorteilhaften Ausführungsform wird die Höhenstellbewegung S durch die Höhenmerkvorrichtung 4 mit einem Anschlagsabschnitt 16 mechanisch begrenzt. Die Höhenmerkvorrichtung 4 umfasst vorzugsweise einen oder mehrere Anschlagsabschnitte 16, an denen die Höhenstellvorrichtung 3, vorzugsweise ein Gestänge 7, entlang der Höhenstellbewegung S anstoßen kann, um die Höhenstellbewegung, vorzugsweise mechanisch, zu begrenzen.

Die Figuren 5 und 7 zeigen eine mögliche vorteilhafte Ausführungsform einer Höhenmerkvorrichtung 4 mit einem Begrenzungsvorrichtung 14, die eine schwenkbare Begrenzungsschwinge 15 und mehrere Anschlagsabschnitte 16 umfasst, an die das Gestänge 7 der Höhenstellvorrichtung 3 anstoßen kann, wobei der die Höhenstellbewegung S am jeweiligen Anschlagsabschnitt begrenzt wird.

Figur 7 zeigt eine besonders vorteilhaft ausgebildete Höhenmerkvorrichtung 4 aus verschiedenen Perspektiven. Die jeweils beschrieben Merkmale können in Bezug auf die dargestellte Ausführungsform auch einzeln oder in anderen Kombinationen miteinander verwendet oder weggelassen werden. Insbesondere kann jedes hier offenbarte Merkmal der Höhenmerkvorrichtung und/oder der Höhenstellvorrichtung jeweils einzeln oder in Kombination mit den übrigen Merkmalen mit den Gegenständen der eigenständigen Ansprüche kombiniert werden.

In einer vorteilhaften Ausführungsform umfasst die Höhenmerkvorrichtung 4 einen Grundrahmen 13. Der Grundrahmen 13 ist vorzugsweise fest an einem Karosserieelement 51 des Gartenmähfahrzeugs befestigt, z.B. an einem Blech verschraubt.

Die Höhenmerkvorrichtung 4 umfasst vorzugsweise ein Einstellmittel 10 mit einem Handgriff 11 und einem verschiebbaren Schlitten 30 und/oder einem verschiebbaren Arm 31. Das Einstellmittel, insbesondere der Handgriff 11, der Schlitten 30 und der Arm 31, sind entlang einer Positionierbewegung P beweglich. Der Schlitten 30 ist, vorzugsweise linear, verschiebbar gegenüber einem Grundrahmen 13 oder der Karosserie des Gartenmähfahrzeugs gelagert.

In der in Figur 7 dargestellten Ausführungsform umfasst der Grundrahmen 13 zwei Nuten, in denen der Schlitten 30 gleitend geführt ist. Der Schlitten 30 kann über den Handgriff 11 und den Arm 31 gegenüber dem Grundrahmen 13 verschoben werden, um die Merkposition M einzustellen.

Vorzugsweise ist das Anzeigemittel kinematisch fest an das Einstellmittel 10 gekoppelt. In der dargestellten Ausführungsform ist das Anzeigemittel durch ein Anzeigefenster 12 im Arm 31 gebildet. Es können auch andere Anzeigemittel, z.B. Markierungselemente, verwendet werden.

Wenn der Benutzer den Handgriff 11 entlang der Positionierungsbewegung P verschiebt, verschiebt sich der Schlitten 30 sowie das Anzeigefenster 12. Dem Benutzer wird durch das Anzeigefenster 12 die darunterliegende Mähdeckhöhe auf der Höhenskala 8 der Höhenstellvorrichtung angezeigt. Das Anzeigefenster hat den besonderen Vorteil, dass es durch die kompakte Bauform und die mechanische Realisierung robust gegen perspektivische Verzerrungen bei der Betrachtung, Sonneneinstrahlung oder ähnliche Umwelteinwirkungen ist.

Die Höhenmerkvorrichtung 4 umfasst vorzugsweise eine Begrenzungsvorrichtung 14. Die Begrenzungsvorrichtung 14 ist dazu ausgebildet, die Höhenstellbewegung S zu begrenzen, vorzugsweise mechanisch.

Die Begrenzungsvorrichtung 14 umfasst in der in Figur 7 dargestellten vorteilhaften Ausführungsform eine Begrenzungsschwinge 15. Die Begrenzungsschwinge 15 ist insbesondere gegenüber einem Grundrahmen 13 schwenkbar gelagert. Die Begrenzungsschwinge ist dazu ausgebildet einen mit dem Einstellmittel 10 einstellbaren Anschlag für die Höhenstellbewegung zu bilden. Die Begrenzungsschwinge 15 ist vorzugsweise kinematisch an die Positionierungsbewegung P des Einstellmittels 10 gekoppelt. Dadurch bewirkt eine Einstellbewegung am Handgriff 11 eine Verstellung der Begrenzungsschwinge. Die Begrenzungsschwinge umfasst zur kinematischen Koppelung vorzugsweise eine Nut, in der ein Stift am Schlitten 30 geführt ist.

Die Begrenzungsvorrichtung 15 umfasst vorzugsweise einen oder mehrere Anschlagsabschnitte 16. In einer vorteilhaften Ausführungsform werden mehrere Anschlagsabschnitte 16 auf einer schwenkbaren Begrenzungsschwinge angeordnet, die jeweils einer stufenweise als Merkhöhe M einstellbare Mähdeckhöhe H (1 - 6) entsprechen. Durch Verstellen des Einstellmittels 10 wird ein Anschlagsabschnitt 16 an einer geeigneten Stelle entlang der Höhenstellbewegung S des Höhenstellvorrichtung 3, vorzugsweise dessen Gestänges 7, positioniert, sodass die Höhenstellbewegung S an dieser Stelle einseitig begrenzt wird. Die Begrenzungsvorrichtung mit einer Begrenzungsschwinge und/oder einem oder mehreren beweglich einstellbaren Anschlagsabschnitten bilden mehrere vorteilhafte Ausführungsformen für eine mechanische Begrenzung der Höhenstellbewegung an der eingestellten Merkposition M.

Die Höhenmerkvorrichtung 4 umfasst vorteilhafterweise außerdem eine Rastvorrichtung 17. Die Rastvorrichtung 17 ist dazu ausgebildet, das Einstellmittel 10 in einer von mehreren einstellbaren Positionen entlang der Positionierungsbewegung P in einem metastabilen Zustand zu halten. Die Rastvorrichtung ist zur stufenweisen Einstellung der Merkposition M ausgebildet. Vorzugweise umfasst die Rastvorrichtung 17 mehrere Rastsenken 19. Die Rastsenken 19 können insbesondere als Konturen oder Aussparungen am Grundrahmen 13 gebildet sein. Jede Rastsenke 19 bildet eine metastabile Einstellposition, die einer einstellbaren Merkposition M entspricht. Die Rastvorrichtung 17 umfasst vorzugsweise eine Rastschwinge 18, an deren Ende eine Rolle 21 angeordnet ist. Die Rastschwinge 18 und die Rolle 21 sind am entlang der Positionierungsbewegung P beweglichen Schlitten 30 angeordnet. Die Rastschwinge 18 wird durch ein Rückstellmittel 20, vorzugsweise eine Feder, in eine der metastabilen Zustände, vorzugsweise eine der Rastsenken 19, gezogen. Bewegt der Benutzer das Einstellmittel 10, z.B. am Handgriff 11, entlang der Positionierungsbewegung P muss der Benutzer die Rückstellkraft des Rückstellmittels 20 überwinden, um die Rolle 21 aus der momentanen Rastsenke 19 herausheben und in eine nebenliegende Rastsenke 19 schieben, in der eine weiterer metastabiler Zustand erreicht ist. Die Rastvorrichtung 17 bietet dem Benutzer damit eine haptische und/oder akustische Rückmeldung und hält das Einstellmittel 10 metastabil in einer von mehreren vordefinierten Zuständen, die jeweils einer als Merkposition M einstellbaren Mähdeckhöhe H entspricht.

Zur Abstützung der am Einstellmittel 10 vom Benutzer aufgebrachten Kräfte und Momente umfasst der Arm 31 vorzugsweise eine Stützrolle 50, die dazu ausgebildet ist, die auf das Einstellmittel 10 wirkenden Bedienungskräfte, d.h. Kräfte und Momente, gegenüber einem Karosserieelement 51 abzustützen. Damit wird die Verwindung der Höhenmerkvorrichtung 4 reduziert.

**Bezugszeichen**

| | | |
|---|---|---|
| 1 | Gartenmähfahrzeug | Garden mowing vehicle |
| 2 | Mähdeck | Mowing deck |
| 3 | Höhenstellvorrichtung | Height setting device |
| 4 | Höhenmerkvorrichtung | Height memory device |
| 5 | Sitz | Seat |
| 6 | Höhenstellhebel | Height setting lever |
| 7 | Gestänge | Rod assembly |
| 8 | Höhenskala | Height scale |
| 9 | Anzeigemittel | Indicator means |
| 10 | Einstellmittel | Adjusting means |
| 11 | Handgriff | Handle |
| 12 | Anzeigefenster | Indicator window |
| 13 | Grundrahmen | Base frame |
| 14 | Begrenzungsvorrichtung | Limiting device |
| 15 | Begrenzungsschwinge | Limiting wing |
| 16 | Anschlagsabschnitt | Limiting portion |
| 17 | Rastvorrichtung | Detent device |
| 18 | Rastschwinge | Detent swingarm |
| 19 | Rastsenken | Detent sink |
| 20 | Rückstellmittel | Resetting element |
| 21 | Rolle | Roller |
| 30 | Schlitten | Slider |
| 31 | Arm | Arm |
| 50 | Stützrolle | Support roller |
| 51 | Karosserieelement | Chassis element |
| H | Mähdeckhöhe | Mowing deck height |
| L | Schwenkbewegung | Swivel movement |
| M | Merkposition | Memory position |
| P | Positionierbewegung | Positioning movement |
| S | Höhenstellbewegung | Height setting movement |
| T | Transportposition | Transport position |

## Patentansprüche

1. Höhenmerkvorrichtung für ein Gartenmähfahrzeug (1) mit einem höhenverstellbaren Mähdeck (2), wobei das Gartenmähfahrzeug (1) eine Höhenstellvorrichtung (3) umfasst, mit der das Mähdeck (2) in mehreren Mähdeckhöhen (H) auf einer Höhenskala (8) einstellbar ist, wobei die Höhenmerkvorrichtung (4) dazu ausgebildet ist, eine der mehreren einstellbaren Mähdeckhöhen (H) als Merkposition (M) zu speichern, und ein Anzeigemittel (9) umfasst, das dem Benutzer die gespeicherte Merkposition (M) anzeigt, und ein Einstellmittel (10) umfasst, mit dem die Merkposition (M) vom Benutzer einstellbar ist, **dadurch gekennzeichnet, dass** die Höhenmerkvorrichtung (4) ein mechanisches Einstellmittel (10) mit einem Handgriff (11) umfasst, mit dem die Merkposition (M) durch den Benutzer einstellbar ist.

2. Höhenmerkvorrichtung nach einem der vorhergehenden Ansprüche, wobei die Höhenmerkvorrichtung (4) ein mechanisches Anzeigemittel (9), vorzugsweise ein bewegbares Anzeigefenster (12) zur Anordnung über einer Höhenskala (8), umfasst, mit dem die eingestellte Merkposition (M) dem Benutzer angezeigt wird.

3. Höhenmerkvorrichtung nach einem der vorhergehenden Ansprüche, wobei die Höhenmerkvorrichtung (4) dazu ausgebildet ist neben einem Sitz (5) des Gartenmähfahrzeugs (1), vorzugsanweise an einem Höhenstellhebel (6) der Höhenstellvorrichtung (3), angeordnet zu werden.

4. Höhenmerkvorrichtung nach einem der vorhergehenden Ansprüche, wobei die Höhenmerkvorrichtung (4) durch mechanische Begrenzung der Höhenstellbewegung (S) an die Höhenstellvorrichtung (3) koppelbar ist, wobei die Begrenzungsvorrichtung (14) vorzugsweise dazu ausgebildet ist, die Höhenstellbewegung (S) der Höhenstellvorrichtung (3) zu begrenzen, welche eine Begrenzungsschwinge (15) umfasst, wobei die Begrenzungsschwinge (15) vorzugsweise gegenüber einem Grundrahmen (13) schwenkbar ist und/oder mit dem Einstellmittel (10) gekoppelt ist und einen oder mehrere Anschlagsabschnitte (16) umfasst, die in Abhängigkeit der eingestellten Merkposition (M) als mechanischer Anschlag für die Höhenstellvorrichtung (3) positionierbar sind, wobei die Schwenkbewegung (L) der Begrenzungsschwinge (15) an die Positionierbewegung (P) des Einstellmittels (10) gekoppelt ist.

5. Höhenmerkvorrichtung nach einem der vorhergehenden Ansprüche, wobei die Höhenmerkvorrichtung (4) eine Rastvorrichtung (17) zur stufenweisen Einstellung der Merkposition (M) umfasst, welche eine Rastschwinge (18) umfasst, die mit einem Rückstellmittel (20) verbunden ist und an deren Ende eine Rolle (21) angeordnet ist, wobei die Rolle (21) durch das Rückstellmittel (20) metastabil in einer von mehreren Rastsenken (19) gehalten wird.

6. Höhenmerkvorrichtung nach einem der vorhergehenden Ansprüche, wobei die Höhenmerkvorrichtung (4) einen Grundrahmen (13) umfasst, der an einem Karosserieelement des Gartenmähfahrzeugs (1) befestigbar ist.

7. Höhenmerkvorrichtung nach einem der vorhergehenden Ansprüche, wobei die Höhenmerkvorrichtung (4) einen Schlitten (30) umfasst, der gegenüber einem Grundrahmen (13) verschiebbar gelagert ist und mit dem Einstellmittel (10) verbunden ist.

8. Höhenmerkvorrichtung nach einem der vorhergehenden Ansprüche, wobei die Höhenmerkvorrichtung (4) dazu ausgebildet ist, dem Benutzer die eingestellte Merkposition (M) auf einer dargestellten Höhenskala (8) der einstellbaren Mähdeckhöhen (H) der Höhenstellvorrichtung (4) anzuzeigen.

9. Höhenmerkvorrichtung nach einem der vorhergehenden Ansprüche, wobei die Höhenmerkvorrichtung (4) dazu ausgebildet ist, von einem Benutzer auf dem Sitz (5) des Gartenmähfahrzeugs (1) mit Handkraft bedient zu werden.

10. Höhenmerkvorrichtung nach einem der vorhergehenden Ansprüche, wobei die Höhenmerkvorrichtung (3) einen Arm (31) umfasst, mit dem das Einstellmittel mit einem Schlitten (30) verbunden ist, wobei der Arm (31) eine Stützrolle (50) umfasst, die dazu ausgebildet ist Betätigungskräfte am Einstellmittel (10) gegenüber einem Karosserieelement (51) des Gartenmähfahrzeugs abzustützen.

11. Höhenmerkvorrichtung nach einem der vorhergehenden Ansprüche, wobei die Höhenmerkvorrichtung (4) an einer Höhenstellvorrichtung (3) eines Gartenmähfahrzeugs (1) nachrüstbar ist.

12. Gartenmähfahrzeug mit einem höhenverstellbaren Mähdeck (2), einer Höhenstellvorrichtung (3) zur Einstellung der Mähdeckhöhe (H) und einer Höhenmerkvorrichtung (4) nach einem der vorhergehenden Ansprüche.

13. Gartenmähfahrzeug nach Anspruch 19, umfassend eine Höhenstellvorrichtung (3) mit einem Höhenstellhebel (6) und einem Gestänge (7), wobei der Höhenstellhebel (6) zwischen einer arretierbaren Transportposition (T) und der eingestellten Merkposition (M) bewegbar ist.

14. Gartenmähfahrzeug nach einem der vorhergehenden Ansprüche, wobei die Stellbewegung (S) durch die Höhenmerkvorrichtung (3) mechanisch begrenzt wird.

15. Gartenmähfahrzeug nach einem der vorhergehenden Ansprüche, wobei das Mähdeck (2) in einer Transportposition (T) durch eine Bewegung quer zur Höhenstellbewegung (S) arretierbar ist, wobei das Mähdeck durch Handkraft des Benutzers mit der Höhenstellvorrichtung (3) angehoben werden kann und die Höhenstellvorrichtung (3) dazu ausgebildet ist, das Mähdeck durch dessen Eigengewicht bis zur eingestellten Merkposition (M) abzusenken.
